# EUROPEAN PATENT APPLICATION

(11) **EP 4 207 845 A1**
(43) Date of publication of application: **05.07.2023**
(21) Application number: 20952919.7
(22) Date of filing: 14.09.2020
(51) Int. Cl.: H04W 8/30, H04L 27/32

(54) **COMMUNICATION METHOD AND APPARATUS**

(71) Applicant: Huawei Technologies Co., Ltd., Shenzhen, Guangdong 518129 (CN)
(72) Inventor: YU, Yawei, Shenzhen, Guangdong 518129 (CN); GUO, Zhiheng, Shenzhen, Guangdong 518129 (CN)
(74) Representative: Grünecker Patent- und Rechtsanwälte PartG mbB
(86) International application number: PCT/CN2020/115161
(87) International publication number: WO 2022/052131

(57) **Abstract**

This application provides a communication method and apparatus. The method includes: A terminal device receives an MCS index value from a network device, and determines, in an MCS index table, a modulation method and a target bit rate that correspond to the MCS index value, where a maximum target bit rate corresponding to a π/2 BPSK modulation method in the MCS index table is greater than a first threshold, so that the terminal device can achieve higher spectral efficiency when performing uplink transmission by using the π/2 BPSK modulation method, thereby improving uplink performance.

## Description

### TECHNICAL FIELD

This application relates to the communication field, and more specifically, to a communication method and apparatus.

### BACKGROUND

In uplink transmission of a current new radio access technology (New Radio Access Technology, NR) system, a transmission capability of user equipment (user equipment, UE) is limited, for example, a quantity of antennas is small, processing of a baseband chip is average, and energy consumption is restricted. Compared with downlink transmission, an uplink transmission power and an uplink transmission rate face a greater challenge. Generally, to ensure correct demodulation of uplink transmission data, a base station (base station, or g NodeB, gNB) side has a threshold requirement on a signal to noise ratio (Signal to Noise Power Ratio, SNR) of a received uplink signal, where the threshold requirement is referred to as sensitivity of a receiver. Correct signal estimation and data demodulation can be ensured only when the SNR of the received signal is higher than the sensitivity. Therefore, in the case of a given propagation loss for a specific transmission distance, a transmit power of a UE side for uplink data is very important for correct demodulation on the base station side.

A peak to average power ratio (Peak to Average Power Ratio, PAPR) in the case of using a quadrature phase shift keying (Quadrature Phase Shift Keying, QPSK) modulation scheme is greater than a PAPR in the case of using a π/2 binary phase shift keying (Binary Phase Shift Keying, BPSK) modulation scheme, and that a maximum power in the QPSK case exceeds a linear threshold of a power amplifier (Power Amplifier, PA) is more likely to occur. Therefore, a power reduction value of QPSK is greater than that of π/2 BPSK, and an actual transmit power is less than a maximum power allowed by π/2 BPSK, resulting losses of uplink transmission performance.

In uplink transmission, in addition to the transmit power, a target transmission rate is also a key indicator for measuring an uplink transmission capability of a current NR system. To be specific, on time-frequency resources in different scenarios, maximally improving uplink transmission efficiency, for example, reducing pilot overheads and reducing redundancy of sent information, help improve an uplink transmission throughput.

In an existing NR protocol, the π/2 BPSK modulation scheme is used, a corresponding target bit rate is low, and a large quantity of redundant bits are introduced in a transmitted information bit sequence, resulting in low spectral efficiency.

### SUMMARY

This application provides a communication method and apparatus, to help a terminal device achieve higher spectral efficiency when performing uplink transmission by using a π/2 BPSK modulation method with a larger transmit power, to improve uplink performance.

According to a first aspect, a communication method is provided, for indicating an MCS. The method includes: sending first indication information to a terminal device, where the first indication information indicates a first MCS index table or a second MCS index table; and sending downlink control information DCI to the terminal device, where the DCI includes a first MCS index value, and the first MCS index value is a value in the first MCS index table or the second MCS index table; the first MCS index table includes a second MCS index value, a modulation order corresponding to the second MCS index value is 1, a product of a target bit rate corresponding to the second MCS index value and 1024 is greater than 314, and a quantity of MCS index values whose corresponding modulation orders are 1 in the first MCS index table is greater than or equal to 3; and the second MCS index table includes a third MCS index value, a modulation order corresponding to the third MCS index value is 1, a product of a target bit rate corresponding to the third MCS index value and 1024 is greater than 198, and a quantity of MCS index values whose corresponding modulation orders are 1 in the second MCS index table is greater than or equal to 7.

Based on the foregoing technical solution, a value of a target bit rate corresponding to a π/2 BPSK modulation method is increased in an extension manner or a redefinition manner based on an MCS index table in an existing protocol. Correspondingly, the target bit rate corresponding to the π/2 BPSK modulation method is also higher, thereby improving uplink data transmission performance.

With reference to the first aspect, in some implementations of the first aspect, a product of 1024 and a target bit rate corresponding to an MCS index value whose corresponding modulation order is 1 in the first MCS index table includes at least one in a first set, and the first set is {340, 378, 379, 386, 434, 449, 466, 490, 502, 517, 526, 553, 567, 602, 616, 658, 666, 679, 719, 758, 772, 822, 873, 898, 910, 948}. Alternatively, a product of 1024 and a target bit rate corresponding to an MCS index value whose corresponding modulation order is 1 in the second MCS index table includes at least one in a second set, and the second set is {240, 314, 340, 378, 379, 386, 434, 449, 466, 490, 502, 517, 526, 553, 567, 602, 616, 658, 666, 679, 719, 758, 772, 822, 873, 898, 910, 948}.

With reference to the first aspect, in some implementations of the first aspect, the second MCS index value is one of 28 to 31; or the third MCS index value is one of 28 to 31.

With reference to the first aspect, in some implementations of the first aspect, a quantity of MCS index values in the first MCS index table is greater than 32; or a quantity of MCS index values in the second MCS index table is greater than 32.

With reference to the first aspect, in some implementations of the first aspect, the method further includes: sending second indication information to the terminal device, where the second indication information indicates that a modulation order for uplink transmission of the terminal device is 1.

According to a second aspect, a communication method is provided, for indicating an MCS. The method includes: receiving first indication information from the network device, where the first indication information indicates a first MCS index table or a second MCS index table; receiving DCI sent by the network device, where the DCI includes a first MCS index value, and the first MCS index value is a value in the first MCS index table or the second MCS index table; determining a first target bit rate for uplink transmission corresponding to the first MCS index value in the first MCS index table or the second MCS index table, the first MCS index table includes a second MCS index value, a modulation order corresponding to the second MCS index value is 1, a product of a target bit rate corresponding to the second MCS index value and 1024 is greater than 314, and a quantity of MCS index values whose corresponding modulation orders are 1 in the first MCS index table is greater than or equal to 3; and the second MCS index table includes a third MCS index value, a modulation order corresponding to the third MCS index value is 1, a product of a target bit rate corresponding to the third MCS index value and 1024 is greater than 198, and a quantity of MCS index values whose corresponding modulation orders are 1 in the second MCS index table is greater than or equal to 7.

Based on the foregoing technical solution, based on an MCS index table in an existing protocol, a value of a target bit rate corresponding to a π/2 BPSK modulation method is increased in the MCS index table in an extension manner or a redefinition manner, and correspondingly, the target bit rate corresponding to the π/2 BPSK modulation method is also higher, thereby improving uplink data transmission performance.

With reference to the second aspect, in some implementations of the second aspect, a product of 1024 and a target bit rate corresponding to an MCS index value whose corresponding modulation order is 1 in the first MCS index table includes at least one in a first set, and the first set is {340, 378, 379, 386, 434, 449, 466, 490, 502, 517, 526, 553, 567, 602, 616, 658, 666, 679, 719, 758, 772, 822, 873, 898, 910, 948}. Alternatively, a product of 1024 and a target bit rate corresponding to an MCS index value whose corresponding modulation order is 1 in the second MCS index table includes at least one in a second set, and the second set is {240, 314, 340, 378, 379, 386, 434, 449, 466, 490, 502, 517, 526, 553, 567, 602, 616, 658, 666, 679, 719, 758, 772, 822, 873, 898, 910, 948}.

With reference to the second aspect, in some implementations of the second aspect, the second MCS index value is one of 28 to 31; or the third MCS index value is one of 28 to 31.

Based on the foregoing technical solution, based on two tables in the existing protocol, π/2 BPSK with a higher target bit rate is introduced by flexibly configuring more MCS index values whose corresponding modulation orders are q without increasing MCS index value indication overheads.

With reference to the second aspect, in some implementations of the second aspect, a quantity of MCS index values in the first MCS index table is greater than 32; or a quantity of MCS index values in the second MCS index table is greater than 32.

With reference to the second aspect, in some implementations of the second aspect, the method further includes: receiving second indication information from the network device, where the second indication information indicates that a modulation order used for uplink transmission is 1; and determining, based on the second indication information, that the modulation order used for uplink transmission is 1.

According to a third aspect, a communication method is provided, for indicating an MCS. The method includes: sending first indication information to the terminal device, where the first indication information indicates a third MCS index table, and modulation orders corresponding to MCS index values in the third MCS index table include values 1 and 2, and do not include a value greater than or equal to 6; and sending DCI to the terminal device, where the DCI includes a first MCS index value, and the first MCS index value is a value in the third MCS index table.

Based on the foregoing technical solution, an MCS index table used in a coverage enhancement scenario is redefined, more values of the target bit rates corresponding to the π/2 BPSK modulation method are increased in the MCS index table based on the existing protocol. Correspondingly, the target bit rate corresponding to the π/2 BPSK modulation method is higher, thereby improving uplink data transmission performance.

With reference to the third aspect, in some implementations of the third aspect, a quantity of MCS index values in the third MCS index table is 16, the third MCS index table includes M MCS index values whose modulation orders are 1, and M is a positive integer greater than or equal to 3.

With reference to the third aspect, in some implementations of the third aspect, a quantity of MCS index values in the third MCS index table is 32, the third MCS index table includes N MCS index values whose modulation orders are 1, and N is a positive integer greater than or equal to 3.

With reference to the third aspect, in some implementations of the third aspect, in the third MCS index table, a value of a maximum target bit rate corresponding to a modulation order 1 is greater than a first threshold.

According to a fourth aspect, a communication method is provided, for indicating an MCS. The method includes: receiving first indication information from the network device, where the first indication information indicates a third MCS index table; receiving DCI from the network device, where the DCI includes a first MCS index value, and the first MCS index value is a value in the third MCS index table; and determining, in the third MCS index table, a first modulation order and a first target bit rate for uplink transmission that correspond to the first MCS index value, where modulation orders corresponding to MCS index values in the third MCS index table include values 1 and 2, and do not include a value greater than or equal to 6.

With reference to the fourth aspect, in some implementations of the fourth aspect, a quantity of MCS index values in the third MCS index table is 16, the third MCS index table includes M MCS index values whose modulation orders are 1, and M is a positive integer greater than or equal to 3.

With reference to the fourth aspect, in some implementations of the fourth aspect, a quantity of MCS index values in the third MCS index table is 32, the third MCS index table includes M MCS index values whose modulation orders are 1, and M is a positive integer greater than or equal to 3.

With reference to the fourth aspect, in some implementations of the fourth aspect, in the third MCS index table, a value of a maximum target bit rate corresponding to a modulation order 1 is greater than a first threshold.

Based on the foregoing technical solution, an MCS index table used in a coverage enhancement scenario is redefined, more values of the target bit rates corresponding to the π/2 BPSK modulation method are increased in the MCS index table based on the existing protocol. Correspondingly, the target bit rate corresponding to the π/2 BPSK modulation method is higher, thereby improving uplink data transmission performance.

According to a fifth aspect, a communication apparatus is provided. The apparatus is configured to perform the method for indicating an MCS in the first aspect to the fourth aspect. Specifically, the apparatus may include modules configured to perform the communication method in the first aspect to the fourth aspect.

According to a sixth aspect, a communication apparatus is provided, including a processor. The processor is coupled to a memory, and may be configured to execute instructions in the memory, to implement the communication method in the first aspect to the fourth aspect and any possible implementation of the first aspect to the fourth aspect. Optionally, the communication apparatus further includes the memory. Optionally, the communication apparatus further includes a communication interface, the processor is coupled to the communication interface, and the communication interface is configured to input and/or output information. The information includes at least one of instructions or data.

In an implementation, the communication apparatus is a network device. When the communication apparatus is the network device, the communication interface may be a transceiver or an input/output interface.

In another implementation, the communication apparatus is a chip or a chip system. When the communication apparatus is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

In another implementation, the communication apparatus is a chip or a chip system configured in a network device.

Optionally, the transceiver may be a transceiver circuit. Optionally, the input/output interface may be an input/output circuit.

According to a seventh aspect, a computer-readable storage medium is provided, storing a computer program. When the computer program is executed by a communication apparatus, the communication apparatus is enabled to implement the communication method in any one of the first aspect to the fourth aspect or the possible implementations of the first aspect to the fourth aspect.

According to an eighth aspect, a computer program product including instructions is provided. When the instructions are executed by a computer, a communication apparatus is enabled to implement the communication method according to the first aspect to the fourth aspect.

### BRIEF DESCRIPTION OF DRAWINGS

FIG. 1 is a schematic diagram of a wireless communication system applicable to an embodiment of this application.
FIG. 2 is a schematic flowchart of a wireless communication method applicable to an embodiment of this application.
FIG. 3 is a schematic block diagram of a communication apparatus applicable to an embodiment of this application.
FIG. 4 is a schematic diagram of a structure of a communication apparatus applicable to an embodiment of this application.
FIG. 5 is a schematic diagram of an architecture of a communication apparatus applicable to an embodiment of this application.

### DESCRIPTION OF EMBODIMENTS

The following describes technical solutions of this application with reference to the accompanying drawings.

The technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a satellite communication system, a future 5th generation (5th generation, 5G) system or a new radio (new radio, NR) system, and a future communication system.

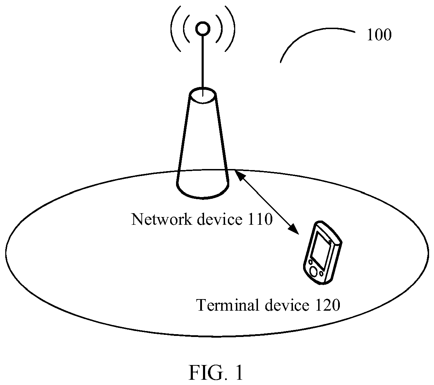

FIG. 1 is a schematic diagram of a wireless communication system 100 applicable to an embodiment of this application.

As shown in FIG. 1, the wireless communication system 100 may include at least one network device, for example, a network device 110 shown in FIG. 1. The wireless communication system 100 may further include at least one terminal device, for example, a terminal device 120 shown in FIG. 1. A wireless connection may be established between the terminal device and the network device, and between the terminal device and the terminal device to perform wireless communication. A sending device may indicate scheduling information of data via control information, so that a receiving device correctly receives the data based on the control information.

The terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an in-vehicle device, a wearable device, a terminal device in a 5G network, a terminal device in a future evolved public land mobile network (public land mobile network, PLMN), or the like.

In addition, the terminal device may alternatively be a terminal device in an Internet of Things (internet of things, IoT) system. The IoT is an important part in development of future information technologies. A main technical feature of the IoT is to connect an object to a network by using a communication technology, to implement an intelligent network for man-machine interconnection and things interconnection.

It can be understood that a specific form of the terminal device is not limited in this application.

The network device in embodiments of this application may be any device that has a wireless transceiver function. The device includes, but not limited to: an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home NodeB (for example, Home evolved NodeB, or Home NodeB, HNB), a baseband unit (BaseBand Unit, BBU), an access point (Access Point, AP) in a wireless fidelity (Wireless Fidelity, Wi-Fi) system, a wireless relay node, a wireless backhaul node, a transmission point (transmission point, TP), or a transmission and reception point (transmission and reception point, TRP). Alternatively, the device may be a gNB or a transmission point (TRP or TP) in a 5G system, for example, an NR system, one antenna panel or a group (including a plurality of antenna panels) of antenna panels of a base station in a 5G system, a network node, for example, a baseband unit (BBU) or a distributed unit (distributed unit, DU) that constitutes a gNB or a transmission point, or the like.

In some deployments, the gNB may include a central unit (central unit, CU) and a DU. The gNB may further include an active antenna unit (active antenna unit, AAU for short). The CU implements some functions of the gNB, and the DU implements some functions of the gNB. For example, the CU is responsible for processing a non-real-time protocol and service, to implement functions of a radio resource control (radio resource control, RRC) layer and a packet data convergence protocol (packet data convergence protocol, PDCP) layer. The DU is responsible for processing a physical layer protocol and a real-time service, to implement functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is changed from information at the PHY layer. Therefore, in this architecture, higher-layer signaling such as RRC layer signaling may also be considered as being sent by the DU or sent by the DU and the AAU. It may be understood that the network device may be a device including one or more of the following: a CU node, a DU node, and an AAU node. In addition, the CU may be classified into a network device in an access network (radio access network, RAN), or the CU may be classified into a network device in a core network (core network, CN). This is not limited in this application.

For ease of understanding of embodiments of this application, the following first briefly describes several terms in this application.

### 1. Power class

Power class (Power Class): A current NR protocol imposes different limitations, that is, different power classes Power Class, on maximum transmit powers of a terminal in different bands based on requirements of a specific absorption rate (Specific Absorption Rate, SAR) based on different bands and a limitation of a capability of a radio frequency component.

There are generally three power classes: 23 dBm, 26 dBm, and 31 dBm. As shown in Table 1, for each power class, a tolerance is introduced under a specific condition, that is, a fluctuation within a specific range may be allowed based on the values of the powers, for example, 2 dBm is increased or 3 dBm is reduced. An upper limit of a transmit power of UE is generally 23 dBm by default, unless otherwise specified.

**Table 1 Power class of user equipment**

| Band | Class 1 (dBm) | Tolerance (dB) | Class 2 (dBm) | Tolerance (dB) | Class 3 (dBm) | Tolerance (dB) |
|---|---|---|---|---|---|---|
| n1 | | | | | 23 | ±2 |
| n2 | | | | | 23 | ±2³ |
| n3 | | | | | 23 | ±2³ |
| n5 | | | | | 23 | ±2 |
| n7 | | | | | 23 | ±2³ |
| n8 | | | | | 23 | ±2³ |
| n12 | | | | | 23 | ±2³ |
| n14 | 31 | +2/-3 | | | 23 | ±2³ |
| n18 | | | | | 23 | ±2 |
| n20 | | | | | 23 | ±2³ |
| n25 | | | | | 23 | ±2 |
| n28 | | | | | 23 | +2/-2.5 |
| n30 | | | | | 23 | ±2 |
| n34 | | | | | 23 | ±2 |
| n38 | | | | | 23 | ±2 |
| n39 | | | | | 23 | ±2 |
| n40 | | | | | 23 | ±2 |
| n41 | | | 26 | +2/-3³ | 23 | ±2³ |
| n48 | | | | | 23 | +2/-3 |
| n50 | | | | | 23 | ±2 |
| n51 | | | | | 23 | ±2 |
| n65 | | | | | 23 | ±2 |
| n66 | | | | | 23 | ±2 |
| n70 | | | | | 23 | ±2 |
| n71 | | | | | 23 | +2/-2.5 |
| n74 | | | | | 23 | ±2 |
| n77 | | | 26 | +2/-3 | 23 | +2/-3 |
| n78 | | | 26 | +2/-3 | 23 | +2/-3 |
| n79 | | | 26 | +2/-3 | 23 | +2/-3 |
| n80 | | | | | 23 | ±2 |
| n81 | | | | | 23 | ±2 |
| n82 | | | | | 23 | ±2 |
| n83 | | | | | 23 | ±2/-2.5 |
| n84 | | | | | 23 | ±2 |
| n86 | | | | | 23 | ±2 |
| Note 1: P_{PowerClass} is a specified maximum UE power without considering a tolerance. | | | | | | |
| Note 2: Unless otherwise specified, power class 3 is a default power class. | | | | | | |
| Note 3: Refers to a transmission bandwidth confined within F_{UL_low} and F_{UL_low}+4 MHz or F_{UL_high}-4 MHz and F_{UL_high}, and a requirement of a maximum output power is relaxed by reducing the tolerance by 1.5 dB. | | | | | | |

### 2. Maximum power reduction

Maximum power reduction (Maximum Power Reduction, MPR): Generally, during data transmission, a signal is amplified by a power amplifier (Power Amplifier, PA). However, the PA has a specific linear working region, that is, the PA can work normally only when a signal transmit power is within a specific range, to avoid non-linear signal power amplification. When the signal transmit power is large and may exceed a linear amplification threshold of the PA, specific maximum power reduction needs to be performed on the signal transmit power.

In an existing NR protocol, when different modulation schemes are used, values of the MPR may be different. For example, higher order modulation is more sensitive to an error vector magnitude (Error Vector Magnitude, EVM) when being used, that is, a small nonlinear distortion of amplification of the PA may cause blur and incorrect demodulation between constellation points of the higher order modulation. Therefore, when the higher order modulation is used, MPR is usually larger, and a requirement for a maximum transmit power is stricter. Table 2 shows MPR values when different modulation schemes are used for the UE for power class 3. It is mentioned in Note 1 that when the following conditions are met, the UE of 23 dBm can perform transmission at a higher power of 26 dBm:
(1) π/2 BPSK modulation is used;
(2) a value of a power boost parameter powerBoostπ/2BPSK configured via higher layer signaling is 1; and
(3) in bands n40, n41, n77, n78, and n79, a proportion of a total quantity of slots for uplink data transmission does not exceed 40%.

**Table 2 Maximum power reduction value of UE for power class 3**

| Modulation | | MPR(dB) | | |
|---|---|---|---|---|
| | | Edge RB allocations | Outer RB allocations | Inner RB allocations |
| DFT-s-OFDM | π/2 BPSK | ≤3.51 | ≤1.21 | ≤0.21 |
| | | 0.52 | 0.52 | 02 |
| | QPSK | ≤1 | | 0 |
| DFT-s-OFDM | 16 QAM | ≤2 | | ≤1 |
| | 64 QAM | ≤2.5 | | |
| | 256 QAM | 4.5 | | |
| CP-OFDM | QPSK | ≤3 | | ≤1.5 |
| | 16 QAM | ≤3 | | ≤2 |
| | 64 QAM | ≤3.5 | | |
| | 256 QAM | ≤6.5 | | |
| Note 1: Applicable for UE operating in a TDD mode with π/2 PBSK modulation. The UE can support π/2 BPSK | | | | |

| Edge RB allocations | Outer RB allocations | Inner RB allocations | | |
|---|---|---|---|---|
| with power boost. If the power boost parameter π/2 BPSK is set to 1 and in bands n40, n41, n77, n78, and n79, the proportion of the total quantity of slots for uplink transmission does not exceed 40%, a reference power of 0 dB MPR is 26 dBm. | | | | |
| Note 2: Applicable for UE operating in an FDD mode or a TDD mode in bands other than n40, n41, n77, n78, and n79, the power boost parameter π/2 BPSK is set to 0, and in bands n40, n41, n77, n78, and n79, the proportion of the total quantity of slots for transmitting uplink data is greater than 40%. | | | | |

When the three conditions are met, the terminal device can perform uplink transmission at a larger transmit power. However, spectral efficiency corresponding to the π/2 BPSK modulation in the MCS index table in the existing protocol is lower than that corresponding to the QPSK modulation. In this case, the π/2 BPSK modulation or the QPSK modulation has little difference in uplink performance. Therefore, in this application, to resolve a problem that low spectral efficiency is caused by an excessively low target bit rate corresponding to an MCS value of π/2 BPSK, the original MCS index table in the existing protocol is modified and extended, so that the terminal device has higher spectral efficiency when using the π/2 BPSK modulation, thereby improving uplink performance.

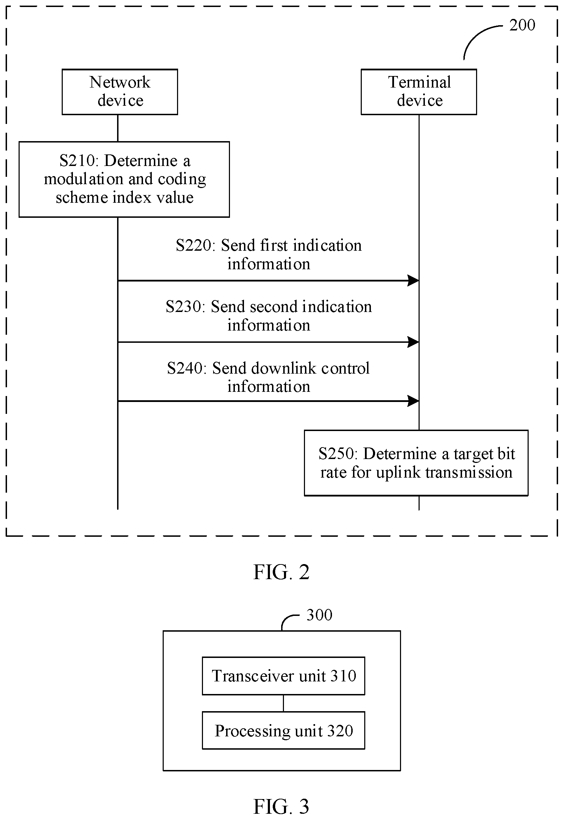

FIG. 2 is a schematic flowchart of a wireless communication method applicable to this application. The method includes the following steps.

S210: A network device determines a first MCS index value.

Specifically, the network device measures uplink channel quality and an interference status based on a received signal, calculates, based on a result of measurement, a modulation method and a target bit rate that allow uplink transmission performance of a terminal device to be the best, and determines, a corresponding first MCS index value in an MCS index table based on the modulation method and the target bit rate.

For example, the modulation method used by the terminal device for uplink transmission may be π/2 BPSK, QPSK, 16 QAM, and 64 QAM. When the network device determines that the terminal device uses the π/2 BPSK modulation method and sets a value of a power boost parameter for the terminal device to 1, and a proportion of uplink subframes in a TDD frame structure is not greater than 40%, a maximum transmit power of the terminal device whose power class is 3 may be increased from 23 dBm to 26 dBm.

S220: The network device sends first indication information, where the first indication information includes an identifier of an MCS index table determined by the network device. Correspondingly, the terminal device receives the first indication information, and determines a first MCS index table or a second MCS index table based on the identifier of the MCS index table included in the first indication information.

Specifically, the first indication information includes enabled transmission precoding, that is, a value of a parameter transformPrecoder configured via RRC signaling is 'enabled'. In addition, the first indication information further includes:
(1) when physical uplink shared channel (Physical Uplink Shared Channel, PUSCH) transmission is dynamically scheduled by using a PDCCH scrambled by using a C-RNTI or an SP-CSI-RNTI, and if a value of a parameter pusch-Config::Mcs-Table-forDCIFormat0_2 configured via the RRC signaling is 'qam64LowSE' or a value of a parameter pusch-Config::mcs-TableTransformPrecoder is 'qam64LowSE', the first indication information indicates that the terminal uses the second MCS index table;
(2) when the PUSCH transmission is dynamically scheduled by using a PDCCH scrambled by using an MCS-C-RNTI, the first indication information indicates that the terminal uses the second MCS index table; and
(3) when a PUSCH is a configured grant configure grant, and if a value of a parameter configuredGrantConfig::mcs-TableTransformPrecoder configured via the RRC signaling is 'qam64LowSE', the first indication information indicates that the terminal uses the second MCS index table.

If the foregoing conditions are not met and any one of the following conditions is not met, the first indication information indicates that the terminal uses the first MCS index table.

Any one of the following conditions includes:
(4) when the PUSCH transmission is scheduled by using the PDCCH scrambled by using the C-RNTI or the SP-CSI-RNTI and the value of the parameter pusch-Config: :Mcs-Table-forDCIFormatO_2 configured via the RRC signaling is 'qam256' or the value of the parameter pusch-Config::mcs-TableTransformPrecoder is 'qam256'; and
(5) when the value of the parameter configuredGrantConfig:: mcs-TableTransformPrecoder configured via the RRC signaling is 'qam256'.

It can be understood that when there is a predefined and newly added third MCS index table on two ends of the terminal device and the network device, the first indication information may further indicate the third MCS index table.

Specifically, when the first indication information indicates that the terminal device uses the third MCS index table, a value of a field MCS-Table configured via the RRC signaling and included in the first indication information is no longer 'qam64LowSE' or 'qam256', but is, for example, 'CoverageEnhance'.

S230: The network device sends second indication information, where the second indication information may indicate a modulation order used by the terminal device for uplink transmission. Correspondingly, the terminal device receives the second indication information, and determines a modulation scheme based on the second indication information.

Specifically, when the network device indicates, via the second indication information, the terminal device to use the π/2 BPSK modulation method, a modulation order is 1.

For example, the second indication information includes that: a parameter tp-pi2BPSK is configured via the RRC signaling, that is, indicates that the terminal device uses the π/2 BPSK modulation method whose modulation order q is 1 for uplink transmission.

It can be understood that the first indication information and the second indication information may be same information, or may be different information. This is not limited herein. Specifically, the indication information may be RRC or MAC signaling. Similarly, the indication information may alternatively be DCI. In this way, the modulation scheme used by the terminal device for uplink transmission can be more flexibly switched.

It can be further understood that a sending sequence of the first indication information and the second indication information may be that the first indication information is before the second indication information, or may be that the second indication information is before the first indication information. The sending sequence is not limited herein.

S240: The network device sends downlink control information DCI.

Specifically, the DCI sent by the network device includes the first MCS index value determined by the network device, and the first MCS index value indicates a target bit rate for uplink transmission of the terminal device. Correspondingly, the terminal device receives the DCI, and determines the target bit rate for uplink transmission corresponding to the first MCS index value.

Specifically, an MCS index table to which the first MCS index value belongs may be the first MCS index table or the second MCS index table. The first MCS index table may be understood as being applied to a common scenario, and the second MCS index table may be understood as being applied to an URLLC scenario (supporting extremely low spectral efficiency and a target bit rate to ensure high reliability). The first MCS index table includes a second MCS index value, a modulation order corresponding to the second MCS index value is 1, a product of a target bit rate corresponding to the second MCS index value and 1024 is greater than 314, that is, the target bit rate corresponding to the second MCS index value is greater than 314/1024, and a quantity of MCS index values whose corresponding modulation orders are 1 in the first MCS index table is greater than or equal to 3.

It can be understood that when the first indication information indicates that the terminal device uses the third MCS index table, the MCS index table to which the first MCS index value that is included in the DCI from the network device belongs is the third MCS index table. Correspondingly, the terminal device receives the DCI, and determines, in the third MCS index table, the target bit rate for uplink transmission corresponding to the first MCS index value.

For example, based on an MCS index table that is applied to the common scenario in the existing protocol, at least one MCS index value is introduced, a modulation order corresponding to the MCS index value is 1, a product of a target bit rate and 1024 is greater than 314, the product of the target bit rate and 1024 includes at least one in a first set, and the first set is {340, 378, 379, 386, 434, 449, 466, 490, 502, 517, 526, 553, 567, 602, 616, 658, 666, 679, 719, 758, 772, 822, 873, 898, 910, 948, 1052, 1204, 1358}. For example, index values 2 to 9 are newly introduced in Table 3, and corresponding modulation orders are 1 and products of target bit rates and 1024 are greater than 314. In this case, five bits in the DCI need to indicate all MCS index values in the first MCS index table. In the first MCS index table, target bit rates corresponding to π/2 BPSK are more than those in the existing protocol, and corresponding spectral efficiency is also higher than that in the existing protocol.

**Table 3**

| MCS index value | Modulation order | Target bit rate*1024 | Spectral efficiency |
|---|---|---|---|
| 0 | q | 240/q | 0.2344 |
| 1 | q | 314/q | 0.3066 |
| 2 | q | 386/q | 0.3770 |
| 3 | q | 502/q | 0.4902 |
| 4 | q | 616/q | 0.6016 |
| 5 | q | 758/q | 0.7402 |
| 6 | q | 898/q | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | Reserved | |
| 29 | 2 | Reserved | |
| 30 | 4 | Reserved | |
| 31 | 6 | Reserved | |

It can be understood that values of a corresponding target bit rate and corresponding spectral efficiency when the modulation order is 1 in Table 3 are merely an example, and the values of the corresponding target bit rate and the corresponding spectral efficiency may alternatively be values other than those shown in Table 3 in the first set. This is not limited herein.

Specifically, the second MCS index table includes a third MCS index value, a modulation order corresponding to the third MCS index value is 1, a product of a target bit rate corresponding to the third MCS index value and 1024 is greater than 198, a quantity of MCS index values whose corresponding modulation orders are 1 in the second MCS index table is greater than or equal to 7, a product of a specific target bit rate and 1024 includes at least one in a second set, and the second set is {240, 314, 340, 378, 379, 386, 434, 449, 466, 490, 502, 517, 526, 553, 567, 602, 616, 658, 666, 679, 719, 758, 772, 822, 873, 898, 910, 948, 1052, 1204, 1358}.

For example, based on the MCS index table in the existing protocol, no new MCS index value is added, and partial QPSK (whose modulation order is 2) in the existing protocol is replaced with π/2 BPSK (whose modulation order is 1), as shown in Table 4. It can be understood that products of target bit rates and 1024 and values of spectral efficiency that correspond to MCS index values 6 to 12 in Table 4 are merely an example. This is not limited herein. The values of the target bit rates* 1024 and the spectral efficiency may alternatively be values other than those shown in Table 4 in the second set. In addition, a specific MCS index value for replacing the MCS value corresponding to the target bit rate* 1024 and the spectral efficiency and a quantity of MCS index values are not limited herein. The MCS index values in the second MCS index table need to be indicated via five bits in the DCI. In the second MCS index table, π/2 BPSK corresponds to more values of target bit rates, and spectral efficiency is higher, so that uplink performance can be improved.

**Table 4**

| MCS index value | Modulation order | Target bit rate*1024 | Spectral efficiency |
|---|---|---|---|
| 0 | q | 60 | 0.0586 |
| 1 | q | 80 | 0.0781 |
| 2 | q | 100 | 0.0977 |
| 3 | q | 128 | 0.1250 |
| 4 | q | 156 | 0.1523 |
| 5 | q | 198 | 0.1934 |
| 6 | q | 240/q | 0.2344 |
| 7 | q | 314/q | 0.3066 |
| 8 | q | 386/q | 0.3770 |
| 9 | q | 502/q | 0.4902 |
| 10 | q | 616/q | 0.6016 |
| 11 | q | 758/q | 0.7402 |
| 12 | q | 898/q | 0.8770 |
| 13 | 2 | 526 | 1.0273 |
| 14 | 2 | 602 | 1.1758 |
| 15 | 2 | 679 | 1.3262 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 4 | 658 | 2.5703 |
| 22 | 4 | 699 | 2.7305 |
| 23 | 4 | 772 | 3.0156 |
| 24 | 6 | 567 | 3.3223 |
| 25 | 6 | 616 | 3.6094 |
| 26 | 6 | 666 | 3.9023 |
| 27 | 6 | 772 | 4.5234 |
| 28 | q | Reserved | |
| 29 | 2 | Reserved | |
| 30 | 4 | Reserved | |
| 31 | 6 | Reserved | |

It can be understood that Table 3 and Table 4 are pre-configured on the two ends of the network device and the terminal device. Based on the two tables in the existing protocol, π/2 BPSK with a higher target bit rate is introduced by flexibly configuring more MCS index values whose corresponding modulation orders are q without increasing MCS index value indication overheads.

Optionally, in the first MCS index table, the second MCS index value may be one of MCS index values 28 to 31. It can be understood that, in an actual case, the use of an excessively high bit rate (for example, the target bit rate is 948/1024) for π/2 BPSK may cause an excessively large channel coding performance loss. In this case, transmission performance may be worse than transmission performance when QPSK with a lower bit rate is used. Therefore, no excessively high target bit rate needs to be defined, and a possible value of a high bit rate of π/2 BPSK can be reduced.

Specifically, values of MCS index values in the first MCS index table may be the same as that in the existing protocol. As shown in Table 5, MCS index values 28 to 31 in the table are MCS index values in a reserved state in the MCS index table in the existing protocol. The four MCS index values in the reserved state may be redefined as π/2 BPSK whose modulation orders are 1, and target bit rates corresponding to the MCS index values are defined, so that spectral efficiency corresponding to π/2 BPSK is higher than 314/1024 in the existing protocol. Specifically, a value of the target bit rate corresponding to π/2 BPSK includes at least one in the first set. In this solution, no existing MCS index state value is newly added. Therefore, five bits in the DCI are still used for indication.

**Table 5**

| MCS index value | Modulation order | Target bit rate* 1024 | Spectral efficiency |
|---|---|---|---|
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | 386/q | 0.3770 |
| 29 | q | 502/q | 0.4902 |
| 30 | q | 616/q | 0.6016 |
| 31 | q | 758/q | 0.7402 |

It can be understood that values of target bit rates and spectral efficiency that correspond to the MCS index values 28 to 31 in Table 5 are merely an example, which are not limited herein. The values of the target bit rates and the spectral efficiency may alternatively be values other than those shown in Table 5 in the first set.

Optionally, in the second MCS index table applied to the URLLC scenario, the third MCS index value may be one of MCS index values 28 to 31. For a specific example, refer to Table 6.

Specifically, values of MCS index values in the second MCS index table may be the same as that in the existing protocol. MCS index values 28 to 31 in Table 6 are the MCS index values in the reserved state in the MCS index table in the existing protocol. The four MCS index values in the reserved state are redefined as π/2 BPSK whose modulation orders are 1, and target bit rates corresponding to the MCS index values are defined, so that a target bit rate corresponding to π/2 BPSK is higher than 198/1024 in the existing protocol. Specifically, a value of the target bit rate corresponding to π/2 BPSK includes at least one in the second set. In this solution, no existing MCS index state value is newly added. Therefore, five bits in the DCI are still used for indication.

**Table 6**

| MCS index value | Modulation order | Target bit rate* 1024 | Spectral efficiency |
|---|---|---|---|
| 0 | q | 60/q | 0.0586 |
| 1 | q | 80/q | 0.0781 |
| 2 | q | 100/q | 0.0977 |
| 3 | q | 128/q | 0.1250 |
| 4 | q | 156/q | 0.1523 |
| 5 | q | 198/q | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 2 | 679 | 1.3262 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 4 | 658 | 2.5703 |
| 22 | 4 | 699 | 2.7305 |
| 23 | 4 | 772 | 3.0156 |
| 24 | 6 | 567 | 3.3223 |
| 25 | 6 | 616 | 3.6094 |
| 26 | 6 | 666 | 3.9023 |
| 27 | 6 | 772 | 4.5234 |
| 28 | q | 240/q | 0.2344 |
| 29 | q | 314/q | 0.3066 |
| 30 | q | 386/q | 0.3770 |
| 31 | q | 512/q | 0.4902 |

It can be understood that values of target bit rates and spectral efficiency that correspond to the MCS index values 28 to 31 in Table 5 and Table 6 are merely an example, which are not limited herein. The values of the target bit rates and the spectral efficiency may alternatively be values other than those shown in Table 6 in the second set. Table 5 and Table 6 are also pre-configured on the two ends of the network device and the terminal device.

Quantities of MCS index values in the MCS tables in Table 3 to Table 6 remain unchanged, and a quantity of bits for indicating MCS index value in the DCI does not need to be increased. In addition, more MCS index values may be introduced. For example, more π/2 BPSK modulation index values and corresponding target bit rates may be newly added to the first MCS index table based on the first table in the original NR protocol, as shown in Table 7. More π/2 BPSK modulation index values and corresponding target bit rates may be newly added to the second MCS index table based on the second table in the original NR protocol, as shown in Table 8.

**Table 7**

| MCS index value | Modulation order | Target bit rate* 1024 | Spectral efficiency |
|---|---|---|---|
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | 1 | 340 | 0.3320 |
| 29 | 1 | 378 | 0.3692 |
| 30 | 1 | 434 | 0.4238 |
| 31 | 1 | 466 | 0.4551 |
| 32 | 1 | 490 | 0.4785 |
| 33 | 1 | 517 | 0.5049 |
| 34 | 1 | 553 | 0.5401 |
| ... | ... | ... | ... |

**Table 8**

| MCS index value | Modulation order | Target bit rate* 1024 | Spectral efficiency |
|---|---|---|---|
| 0 | q | 60/q | 0.0586 |
| 1 | q | 80/q | 0.0781 |
| 2 | q | 100/q | 0.0977 |
| 3 | q | 128/q | 0.1250 |
| 4 | q | 156/q | 0.1523 |
| 5 | q | 198/q | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 2 | 679 | 1.3262 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 4 | 658 | 2.5703 |
| 22 | 4 | 699 | 2.7305 |
| 23 | 4 | 772 | 3.0156 |
| 24 | 6 | 567 | 3.3223 |
| 25 | 6 | 616 | 3.6094 |
| 26 | 6 | 666 | 3.9023 |
| 27 | 6 | 772 | 4.5234 |
| 28 | 1 | 240 | 0.2344 |
| 29 | 1 | 314 | 0.3066 |
| 30 | 1 | 386 | 0.3770 |
| 31 | 1 | 512 | 0.4902 |
| 32 | 1 | 616 | 0.6016 |
| 33 | 1 | 758 | 0.7402 |
| 34 | 1 | 898 | 0.8770 |
| ... | ... | ... | ... |

It can be understood that products of target bit rates corresponding to the newly added MCS index values in Table 7 and 1024 may alternatively be values other than that shown in Table 7 in the first set. Products of target bit rates corresponding to the newly added MCS index values in Table 8 and 1024 may alternatively be values other than that shown in Table 8 in the second set. This is not limited herein.

It can be further understood that quantities of newly added MCS index values in Table 7 and Table 8 are merely an example in the tables. This is not limited herein.

Optionally, generally, in a coverage enhancement scenario, only a low modulation order is used, and 16 QAM (whose corresponding modulation order is 4) and 64 QAM (whose corresponding modulation order is 6) are not likely to be used. Therefore, a third MCS index table that is only for the coverage enhancement scenario is redefined. Modulation orders corresponding to MCS index values in the third MCS index table include values 1 and 2, and do not include a value greater than or equal to 6. A quantity of MCS index values in the third MCS index table is 16. In addition, the third MCS index table includes M MCS index values whose modulation orders are 1, where M is a positive integer greater than or equal to 3, and in the third MCS index table, a value of a maximum target bit rate corresponding to a modulation order 1 is greater than a first threshold, where the first threshold is greater than or equal to 314/1024.

Specifically, the third MCS index table is shown in Table 9. A value of a target bit rate corresponding to π/2 BPSK includes at least one in the first set. In this case, a value of M is 8, and 16 MCS index values in the third MCS index table may be indicated via four bits in the DCI.

**Table 9**

| MCS index value | Modulation order | Target bit rate*1024 | Spectral efficiency |
|---|---|---|---|
| 0 | q | 240/q | 0.2344 |
| 1 | q | 314/q | 0.3066 |
| 2 | q | 379/q | 0.3701 |
| 3 | q | 449/q | 0.4385 |
| 4 | q | 526/q | 0.5137 |
| 5 | q | 602/q | 0.5879 |
| 6 | q | 679/q | 0.6631 |
| 7 | q | 666/q | 0.6504 |
| 8 | q | 719/q | 0.7021 |
| 9 | 2 | 193 | 0.3770 |
| 10 | 2 | 251 | 0.4902 |
| 11 | 2 | 308 | 0.6016 |
| 12 | 2 | 379 | 0.7402 |
| 13 | 2 | 449 | 0.8770 |
| 14 | 2 | 526 | 1.0273 |
| 15 | 2 | 602 | 1.1758 |

It can be understood that values of a target bit rate and spectral efficiency that correspond to π/2 BPSK in Table 9 are merely an example, which are not limited herein. The values of the target bit rate and the spectral efficiency may alternatively be values other than those shown in Table 9 in the first set. Optionally, the quantity of MCS index values in the third MCS index table may alternatively be 32, and the third MCS index table includes N MCS index values whose modulation orders are 1, where N is a positive integer greater than or equal to 3. In addition, in the third MCS index table, a value of a maximum target bit rate corresponding to a modulation order 1 is greater than a first threshold, where the first threshold is greater than or equal to 314/1024.

In addition, a new π/2 BPSK index value may be further added to an MCS table with a lower bit rate, as shown in Table 10. In this case, a value of a maximum target bit rate corresponding to a modulation order 1 is greater than a first threshold, where the first threshold is greater than or equal to 198/1024, and a value of a target bit rate corresponding to π/2 BPSK includes at least one in the second set. A quantity of MCS index values corresponding to the π/2 BPSK modulation scheme is not limited herein.

**Table 10**

| MCS index value | Modulation order | Target bit rate*1024 | Spectral efficiency |
|---|---|---|---|
| 0 | 1 | 60 | 0.0586 |
| 1 | 1 | 80 | 0.0781 |
| 2 | 1 | 100 | 0.0977 |
| 3 | 1 | 128 | 0.1250 |
| 4 | 1 | 156 | 0.1523 |
| 5 | 1 | 198 | 0.1934 |
| 6 | q | 240/q | 0.2344 |
| 7 | q | 314/q | 0.3066 |
| 8 | q | 379/q | 0.3701 |
| 9 | q | 449/q | 0.4385 |
| 10 | q | 526/q | 0.5137 |
| 11 | q | 602/q | 0.5879 |
| 12 | q | 679/q | 0.6631 |
| 13 | q | 666/q | 0.6504 |
| 14 | q | 719/q | 0.7021 |
| 15 | 2 | 193 | 0.3770 |
| 16 | 2 | 251 | 0.4902 |
| 17 | 2 | 308 | 0.6016 |
| 18 | 2 | 379 | 0.7402 |
| 19 | 2 | 449 | 0.8770 |
| 20 | 2 | 526 | 1.0273 |
| 21 | 2 | 602 | 1.1758 |
| 22 | 2 | 679 | 1.3262 |
| ... | ... | ... | ... |

Table 9 or Table 10 is also pre-configured on the two ends of the network device and the terminal device, and coexists with the MCS index table in the existing protocol. In other words, three MCS index tables are pre-configured on the two ends of the network device and the terminal device.

S250: The terminal device determines a target bit rate.

Specifically, the terminal device respectively determines the MCS index table, the modulation order, and the first MCS index value based on the received first indication information, second indication information, and DCI, and then determines, based on the first MCS index value, a target bit rate corresponding to the first MCS index value in the MCS index table, to transmit uplink data.

It can be understood that the first MCS index value may be any MCS index value in Table 3 to Table 10, and is an MCS index value that is determined by the network device through calculation and that corresponds to the target bit rate used by the terminal device for uplink transmission. The second MCS index value is an MCS index value whose corresponding modulation order is 1 and corresponding target bit rate is greater than 314/1024 in the first MCS index table. The third MCS index value is an MCS index value whose corresponding modulation order is 1 and corresponding target bit rate is greater than 198/1024 in the second MCS index table. The first MCS index value may be the second MCS index value, or may be the third MCS index value, or may be an MCS index value other than the second MCS index value and the third MCS index value.

It can be further understood that a writing sequence of sending the first indication information, the second indication information, and the DCI by the network device does not mean an execution sequence. The execution sequence of the processes should be determined based on functions and internal logic of the processes, and should not be construed as any limitation on the implementation processes of embodiments of this application. Similarly, a sequence of receiving the first indication information, the second indication information, and the DCI by the terminal device is not limited.

According to the foregoing three solutions, based on the original MCS index table in the existing protocol, more π/2 BPSK modulation with a high bit rate is introduced in a form of extending or redefining an MCS table, so that uplink transmission performance can be effectively improved.

In the current protocol, PUSCH uplink transmission supports transmission of two waveforms: orthogonal frequency division multiplexing (Orthogonal Frequency Division Multiplexing, OFDM) and DFT-S-OFDM, that is, multi-carrier uplink transmission and single-carrier uplink transmission, and a waveform used for current transmission is indicated by using a value of a parameter field transformPrecoder configured via higher layer signaling. When the value of transformPrecoder is enabled, it indicates that a terminal needs to first perform discrete Fourier transform (Discrete Fourier Transform, DFT) processing on a to-be-sent signal sequence in time domain during PUSCH transmission, and then map the to-be-sent signal sequence to a plurality of resource elements (Resource Element, RE) in frequency domain. Subsequent invert fast Fourier transform (Invert Fast Fourier Transformation, IFFT) processing is an inverse process of DFT processing. A frequency-domain signal is converted into a time-domain signal through IFFT, and after a cyclic prefix is added to the time-domain signal, the time-domain signal is sent. When the value of transformPrecoder is disabled, a plurality of to-be-sent signals are directly mapped to the plurality of REs in frequency domain, a frequency-domain signal is converted into a time-domain signal through IFFT, and after a cyclic prefix is added to the time-domain signal, the time-domain signal is sent. When the DFT-S-OFDM waveform is used for transmission, DFT processing and IFFT processing are an inverse transform process. Therefore, a to-be-sent signal with a low peak-to-average power ratio (Peak-to-Average Power ratio, PAPR) still maintains a low PAPR during sending and receiving, and is friendly to components such as power transmitters of a transmitting end and a receiving end, so as to ensure normal power amplification of a power amplifier. However, when the OFDM waveform is used for transmission, because IFFT processing is performed on a plurality of signals in frequency domain and the signals are converted to time domain, the signals in time domain are equivalent to aliasing of a plurality of frequency-domain subcarrier signals, and a peak value may have an extremely large fluctuation and an extremely small fluctuation, resulting in a large PAPR. When a fluctuation range is greater than a linear working range of a power amplifier, some non-ideal features such as noise may be introduced during power sending, and signal sending and receiving are affected.

When DFT-S-OFDM is used for uplink transmission, currently NR supports only single-stream PUSCH transmission. That is, only one DMRS antenna port can be used to transmit the PUSCH at a time. As a result, uplink transmission efficiency is limited. Therefore, to improve uplink transmission efficiency, it may be considered that multi-stream DFT-S-OFDM PUSCH transmission is supported in uplink transmission. However, in multi-stream transmission, weighted combination needs to be performed on a plurality of signals, and then the plurality of signals are sent through a plurality of antenna ports. This may cause a PAPR to increase. However, a small PAPR can be ensured by using π/2 BPSK modulation. Therefore, when Pi/2 BPSK modulation is used for uplink transmission, an uplink transmission capability can be improved by using a multi-stream DFT-S-OFDM PUSCH transmission solution.

In the current NR protocol, when DFT-S-OFDM is used for PUSCH uplink transmission, that is, when transformPrecoder=enabled, only single-stream transmission is supported. Therefore, a value of maxRank configured by the network device in RRC signaling can only be 1. In this case, only a DMRS configuration of a single antenna port is supported.

Specifically, when a DMRS type is 1 and a maximum length of a DMRS symbol is one OFDM symbol, an antenna port for uplink transmission of the terminal device may be indicated via two bits of the DCI. When the DMRS type is 1 and the maximum length of the DMRS symbol is two OFDM symbols, the antenna port for uplink transmission of the terminal device may be indicated via four bits of the DCI.

In this embodiment, when Pi/2 BPSK modulation is used for uplink transmission, multi-stream transmission may be supported in this case. A value of maxRank configured by the network device in higher layer signaling may be 2 or 4, that is, parallel transmission of two or four layers of data can be supported.

For example, when the value of maxRank configured by the network device in the higher layer signaling is 2, actual transmission of rank=1 and rank=2 may be supported, that is, transmission of one or two layers of data is supported. When the value of maxRank configured by the network device in the higher layer signaling is 4, actual transmission of one layer, two layers, three layers, or four layers of data may be supported.

Specifically, an indication of the antenna port of the DMRS is as follows.

When a DMRS type configured by the network device via higher layer signaling is 1, a maximum length of a DMRS symbol is one OFDM symbol, and only single-stream transmission is supported, an index table indicated by an antenna port of the DMRS is shown in Table 11, and two bits in the DCI may indicate an antenna port for uplink transmission of the terminal device.

**Table 11**

| Value | Quantity of DMRS CDM groups without data | DMRS port |
|---|---|---|
| 0 | 2 | 0 |
| 1 | 2 | 1 |
| 2 | 2 | 2 |
| 3 | 2 | 3 |

When the DMRS type configured by the network device via higher layer signaling is 1, a maximum length of a single DMRS symbol is two OFDM symbols, and only single-stream transmission is supported, an index table indicated by an antenna port of the DMRS is shown in Table 12, and four bits in the DCI may indicate an antenna port for uplink transmission of the terminal device.

**Table 12**

| Value | Quantity of DMRS CDM groups without data | DMRS port | Quantity of front-loaded symbols |
|---|---|---|---|
| 0 | 2 | 0 | 1 |
| 1 | 2 | 1 | 1 |
| 2 | 2 | 2 | 1 |
| 3 | 2 | 3 | 1 |
| 4 | 2 | 0 | 2 |
| 5 | 2 | 1 | 2 |
| 6 | 2 | 2 | 2 |
| 7 | 2 | 3 | 2 |
| 8 | 2 | 4 | 2 |
| 9 | 2 | 5 | 2 |
| 10 | 2 | 6 | 2 |
| 11 | 2 | 7 | 2 |
| 12-15 | Reserved | Reserved | Reserved |

When the DMRS type configured by the network device via higher layer signaling is 1, a maximum length of a single DMRS symbol is one OFDM symbol, and parallel transmission of two layers of data may be supported, an index table indicated by an antenna port of the DMRS is shown in Table 12, and three bits in the DCI may indicate an antenna port for uplink transmission of the terminal device.

**Table 13**

| Value | Quantity of DMRS CDM groups without data | DMRS port |
|---|---|---|
| 0 | 1 | 0, 1 |
| 1 | 2 | 0, 1 |
| 2 | 2 | 2, 3 |
| 3 | 2 | 0, 2 |
| 4-7 | Reserved | Reserved |

When the DMRS type configured by the network device via higher layer signaling is 1, a maximum length of a single DMRS symbol is one OFDM symbol, and parallel transmission of three layers of data may be supported, an index table indicated by an antenna port of the DMRS is shown in Table 14, and three bits in the DCI may indicate an antenna port for uplink transmission of the terminal device.

**Table 14**

| Value | Quantity of DMRS CDM groups without data | DMRS port |
|---|---|---|
| 0 | 2 | 0-2 |
| 2-7 | Reserved | Reserved |

When the DMRS type configured by the network device via higher layer signaling is 1, a maximum length of a single DMRS symbol is one OFDM symbol, and parallel transmission of four layers of data may be supported, an index table indicated by an antenna port of the DMRS is shown in Table 15, and three bits in the DCI may indicate an antenna port for uplink transmission of the terminal device.

**Table 15**

| Value | Quantity of DMRS CDM groups without data | DMRS port |
|---|---|---|
| 0 | 2 | 0-3 |
| 2-7 | Reserved | Reserved |

When the DMRS type configured by the network device via higher layer signaling is 1, a maximum length of a single DMRS symbol is two OFDM symbols, and parallel transmission of two layers of data may be supported, an index table indicated by an antenna port of the DMRS is shown in Table 16, and four bits in the DCI may indicate an antenna port for uplink transmission of the terminal device.

**Table 16**

| Value | Quantity of DMRS CDM groups without data | DMRS port | Quantity of front-loaded symbols |
|---|---|---|---|
| 0 | 1 | 0, 1 | 1 |
| 1 | 2 | 0, 1 | 1 |
| 2 | 2 | 2, 3 | 1 |
| 3 | 2 | 0, 2 | 1 |
| 4 | 2 | 0, 1 | 2 |
| 5 | 2 | 2, 3 | 2 |
| 6 | 2 | 4, 5 | 2 |
| 7 | 2 | 6, 7 | 2 |
| 8 | 2 | 0, 4 | 2 |
| 9 | 2 | 2, 6 | 2 |
| 10-15 | Reserved | Reserved | Reserved |

When the DMRS type configured by the network device via higher layer signaling is 1, a maximum length of a single DMRS symbol is two OFDM symbols, and parallel transmission of three layers of data may be supported, an index table indicated by an antenna port of the DMRS is shown in Table 17, and four bits in the DCI may indicate an antenna port for uplink transmission of the terminal device.

**Table 17**

| Value | Quantity of DMRS CDM groups without data | DMRS port | Quantity of front-loaded symbols |
|---|---|---|---|
| 0 | 2 | 0-2 | 1 |
| 1 | 2 | 0, 1, 4 | 2 |
| 2 | 2 | 2, 3, 6 | 2 |
| 3-15 | Reserved | Reserved | Reserved |

When the DMRS type configured by the network device via higher layer signaling is 1, a maximum length of a single DMRS symbol is two OFDM symbols, and parallel transmission of four layers of data may be supported, an index table indicated by an antenna port of the DMRS is shown in Table 18, and four bits in the DCI may indicate an antenna port for uplink transmission of the terminal device.

**Table 18**

| Value | Quantity of DMRS CDM groups without data | DMRS port | Quantity of front-loaded symbols |
|---|---|---|---|
| 0 | 2 | 0-3 | 1 |
| 1 | 2 | 0, 1, 4, 5 | 2 |
| 2 | 2 | 2, 3, 6, 7 | 2 |
| 3 | 2 | 0, 2, 4, 6 | 2 |
| 4-15 | Reserved | Reserved | Reserved |

In this embodiment, when π/2 BPSK modulation is used for uplink transmission, an uplink transmission capability is improved by supporting multi-stream DFT-S-OFDM PUSCH transmission, and a DMRS antenna port is indicated when π/2 BPSK modulation is used and multi-stream DFT-S-OFDM transmission is supported.

The foregoing methods for indicating an MCS mainly describe the solutions provided in embodiments of this application from a perspective of interaction. It may be understood that, to implement the foregoing function, each network element such as the terminal device or the network device includes a corresponding hardware structure and/or software module for performing each function. A person skilled in the art should be aware that units and algorithm steps in the examples described with reference to the embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of a transmitting end device or a receiving end device may be divided based on the foregoing method examples. For example, each functional module may be divided based on each corresponding function, or two or more functions may be integrated into one processing module. The integrated module may be implemented in a form of hardware, or may be implemented in a form of a software functional module. Notably, in embodiments of this application, module division is an example, and is merely a logical function division. In actual implementation, another division manner may be used. The following descriptions are made by using an example in which functional modules are divided corresponding to functions.

The method provided in embodiments of this application is described above in detail with reference to FIG. 1, FIG. 2, and Table 3 to Table 10. The following describes, in detail, apparatuses provided in embodiments of this application with reference to FIG. 3 to FIG. 5. It can be understood that descriptions of the apparatus embodiments correspond to the descriptions of the method embodiments. Therefore, for content that is not described in detail, refer to the foregoing method embodiments. For brevity, details are not described herein again.

FIG. 3 is a schematic block diagram of a communication apparatus according to an embodiment of this application. As shown in FIG. 3, the communication apparatus 300 may include a transceiver unit 310 and a processing unit 320.

In a possible design, the communication apparatus 300 may correspond to the terminal device in the foregoing method embodiments, for example, may be the terminal device, or may be a chip configured in the terminal device.

It can be understood that the communication apparatus 300 may correspond to the terminal device in the method 200 according to embodiments of this application, and the communication apparatus 300 may include units configured to perform the method performed by the terminal device in the method 200 in FIG. 2. In addition, the units in the communication apparatus 300 and the foregoing other operations and/or functions are separately for implementing corresponding procedures of the method 200 in FIG. 2.

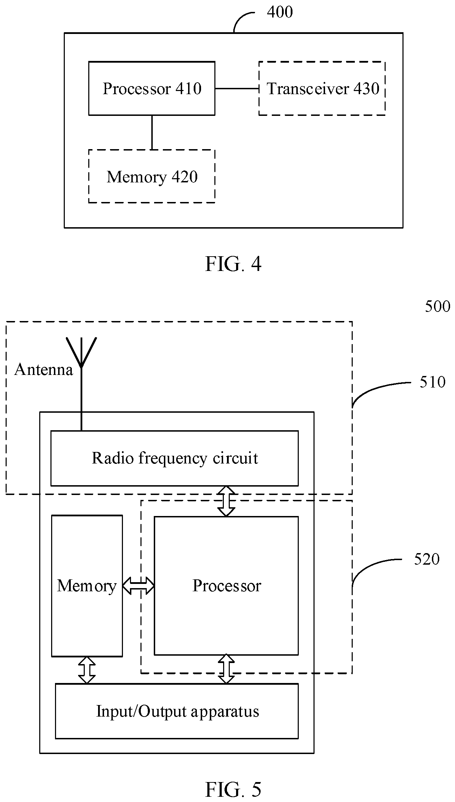

It can be further understood that, when the communication apparatus 300 is a terminal device, a transceiver unit 310 in the communication apparatus 300 may correspond to a transceiver 430 in a terminal device 400 shown in FIG. 4, and a processing unit 320 in the communication apparatus 300 may correspond to a processor 410 in the terminal device 400 shown in FIG. 4.

It can be further understood that when the communication apparatus 300 is the terminal device, the transceiver unit 310 in the communication apparatus 300 may be implemented through a communication interface (for example, a transceiver or an input/output interface), for example, may correspond to the transceiver 430 in the terminal device 400 shown in FIG. 4. The processing unit 320 in the communication apparatus 300 may be implemented by using at least one processor, for example, may correspond to the processor 410 in the terminal device 400 shown in FIG. 4. The processing unit 320 in the communication apparatus 300 may alternatively be implemented by using at least one logic circuit.

Optionally, the communication apparatus 300 may further include a processing unit 320. The processing unit 320 may be configured to process instructions or data, to implement a corresponding operation.

Optionally, the communication apparatus 300 may further include a storage unit. The storage unit may be configured to store instructions or data. The processing unit may invoke the instructions or the data stored in the storage unit, to implement a corresponding operation.

It can be understood that a specific process in which the units perform the corresponding steps is described in detail in the foregoing method embodiments. For brevity, details are not described herein.

In another possible design, the communication apparatus 300 may correspond to the network device in the foregoing method embodiments, for example, may be the network device or may be a chip configured in the network device.

It can be understood that the communication apparatus 300 may correspond to the network device in the method 200 according to embodiments of this application, and the communication apparatus 300 may include units configured to perform the method performed by the network device in the method 200 in FIG. 2. In addition, the units in the communication apparatus 300 and the foregoing other operations and/or functions are separately for implementing corresponding procedures of the method 200 in FIG. 2.

It can be further understood that, when the communication apparatus 300 is a network device, the transceiver unit 310 in the communication apparatus 300 may correspond to a transceiver 430 in a network device 400 shown in FIG. 4, and the processing unit 320 in the communication apparatus 300 may correspond to a processor 410 in the network device 400 shown in FIG. 4.

Optionally, the communication apparatus 300 may further include a processing unit 320. The processing unit 320 may be configured to process instructions or data, to implement a corresponding operation.

Optionally, the communication apparatus 300 may further include a storage unit. The storage unit may be configured to store instructions or data. The processing unit may invoke the instructions or the data stored in the storage unit, to implement a corresponding operation.

It can be understood that a specific process in which the units perform the corresponding steps is described in detail in the foregoing method embodiments. For brevity, details are not described herein.

It can be further understood that, when the communication apparatus 300 is a network device, the transceiver unit 310 in the communication apparatus 300 may be implemented through a communication interface (for example, a transceiver or an input/output interface), for example, may correspond to the transceiver 430 in the network device 400 shown in FIG. 4. The processing unit 320 in the communication apparatus 300 may be implemented by using at least one processor, for example, may correspond to the processor 410 in the network device 400 shown in FIG. 4. The processing unit 320 in the communication apparatus 300 may be implemented by using at least one logic circuit.

FIG. 5 is a schematic diagram of a structure of a network device according to an embodiment of this application, for example, may be a schematic diagram of a related structure of the network device.

It can be understood that the network device 500 shown in FIG. 5 can implement processes related to the network device in the method embodiment shown in FIG. 2. Operations and/or functions of the modules in the network device 500 are respectively for implementing corresponding procedures in the foregoing method embodiments. For details, refer to the descriptions in the foregoing method embodiments. To avoid repetition, detailed descriptions are properly omitted herein.

It can be understood that the network device 500 shown in FIG. 5 is merely a possible architecture of the network device, and should not constitute any limitation on this application. The method provided in this application is applicable to a network device of another architecture, for example, a network device including a CU, a DU, and an AAU. A specific architecture of the network device is not limited in this application.

FIG. 5 may alternatively be a schematic diagram of a structure of a terminal device according to an embodiment of this application, for example, may be a schematic diagram of a related structure of the terminal device.

It can be understood that the terminal device 500 shown in FIG. 5 can implement each process of the terminal device in the method embodiment shown in FIG. 2. Operations and/or functions of the modules in the terminal device 500 are respectively for implementing corresponding procedures in the foregoing method embodiments. For details, refer to the descriptions in the foregoing method embodiments. To avoid repetition, detailed descriptions are properly omitted herein.

It can be understood that the terminal device 500 shown in FIG. 5 is merely a possible architecture of the terminal device, and should not constitute any limitation on this application. The method provided in this application is applicable to a terminal device in another architecture. A specific architecture of the terminal device is not limited in this application.

An embodiment of this application further provides a processing apparatus, including a processor and an interface. The processor is configured to perform the method in any one of the foregoing method embodiments.

It can be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP) circuit, a micro controller unit (micro controller unit, MCU), a programmable controller (programmable logic device, PLD), or another integrated chip.

In an implementation process, the steps in the method may be completed by using an integrated logic circuit of hardware or an instruction in a form of software in the processor. The steps of the methods disclosed with reference to embodiments of this application may be directly performed and completed by a hardware processor, or may be performed and completed by using a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

Notably, the processor in embodiments of this application may be an integrated circuit chip, and has a signal processing capability. In an implementation process, steps in the foregoing method embodiments can be completed by using a hardware integrated logical circuit in the processor, or by using instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly performed and completed by a hardware decoding processor, or may be performed and completed by a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). Notably, the memory of the system and the method described in this specification includes, but not limited to, these memories and any memory of another proper type.

According to the method provided in embodiments of this application, this application further provides a computer program product, including computer program code. When the computer program code is run on a computer, the computer is enabled to perform the method in the embodiment shown in FIG. 2.

According to the method provided in embodiments of this application, this application further provides a computer-readable medium, storing program code. When the program code is run on a computer, the computer is enabled to perform the method in the embodiment shown in FIG. 2.

According to the method provided in embodiments of this application, this application further provides a system, including the foregoing one or more terminal devices and the foregoing one or more network devices.

The network device and the terminal device in the foregoing apparatus embodiments completely correspond to the network device and the terminal device in the method embodiments. A corresponding module or unit performs a corresponding step. For example, a communication unit (a transceiver) performs a receiving step or a sending step in the method embodiments, and other steps than the sending step and the receiving step may be performed by a processing unit (a processor). For a function of a specific unit, refer to a corresponding method embodiment. There may be one or more processors.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any available medium that a computer can access or a data storage device such as a server or a data center that includes one or more integrated available media. The available medium may be a magnetic medium (for example, a floppy disk, a hard disk, or a magnetic tape), an optical medium (for example, a high-density digital video disc (digital video disc, DVD)), a semiconductor medium (for example, a solid-state disk (solid-state disk, SSD)), or the like.

The network device and the terminal device in the foregoing apparatus embodiments completely correspond to the network device and the terminal device in the method embodiments. A corresponding module or unit performs a corresponding step. For example, a communication unit (a transceiver) performs a receiving step or a sending step in the method embodiments, and other steps than the sending step and the receiving step may be performed by a processing unit (a processor). For a function of a specific unit, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that is run on a processor, a processor, an object, an executable file, a thread of execution, a program, and/or a computer. As illustrated by using figures, both a computing device and an application that is run on the computing device may be components. One or more components may reside within a process and/or a thread of execution, and the components may be located on one computer and/or distributed between two or more computers. In addition, these components may be executed from various computer-readable media that store various data structures. The components may communicate by using a local and/or remote process and based on, for example, a signal having one or more data packets (for example, data from two components interacting with another component in a local system, in a distributed system, and/or across a network such as the Internet interacting with other systems via the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it can be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

In the foregoing embodiments, all or some of the functions of the functional units may be implemented by using software, hardware, firmware, or any combination thereof. When software is used to implement the embodiments, all or a part of the embodiments may be implemented in a form of a computer program product. The computer program product includes one or more computer instructions (programs). When the computer program instructions (programs) are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any available medium that a computer can access or a data storage device such as a server or a data center that includes one or more integrated available media. The available medium may be a magnetic medium (for example, a floppy disk, a hard disk, or a magnetic tape), an optical medium (for example, a DVD), a semiconductor medium (for example, a solid-state disk (solid-state disk, SSD)), or the like.

When functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims and this specification.

## Claims

1. A communication method, comprising:
sending first indication information to the terminal device, wherein the first indication information indicates a first modulation and coding scheme MCS index table or a second MCS index table; and
sending downlink control information DCI to the terminal device, wherein the DCI comprises a first MCS index value, and the first MCS index value is a value in the first MCS index table or the second MCS index table;
the first MCS index table comprises a second MCS index value, a modulation order corresponding to the second MCS index value is 1, and a product of a target bit rate corresponding to the second MCS index value and 1024 is greater than 314; and
the second MCS index table comprises a third MCS index value, a modulation order corresponding to the third MCS index value is 1, and a product of a target bit rate corresponding to the third MCS index value and 1024 is greater than 198.

2. The method according to claim 1, wherein a product of 1024 and a target bit rate corresponding to an MCS index value whose corresponding modulation order is 1 in the first MCS index table comprises at least one in a first set, and the first set is {340, 378, 379, 386, 434, 449, 466, 490, 502, 517, 526, 553, 567, 602, 616, 658, 666, 679, 719, 758, 772, 822, 873, 898, 910, 948}; or
a product of 1024 and a target bit rate corresponding to an MCS index value whose corresponding modulation order is 1 in the second MCS index table comprises at least one in a second set, and the second set is {240, 314, 340, 378, 379, 386, 434, 449, 466, 490, 502, 517, 526, 553, 567, 602, 616, 658, 666, 679, 719, 758, 772, 822, 873, 898, 910, 948}.

3. The method according to claim 1 or 2, wherein the second MCS index value is one of 28 to 31; or
the third MCS index value is one of 28 to 31.

4. The method according to claim 1 or 2, wherein a quantity of MCS index values in the first MCS index table is greater than 32; or
a quantity of MCS index values in the second MCS index table is greater than 32.

5. The method according to any one of claims 1 to 4, further comprising:
sending second indication information to the terminal device, wherein the second indication information indicates that a modulation order for uplink transmission of the terminal device is 1.

6. A communication method, comprising:
receiving first indication information from the network device, wherein the first indication information indicates a first MCS index table or a second MCS index table;
receiving DCI from the network device, wherein the DCI comprises a first MCS index value, and the first MCS index value is a value in the first MCS index table or the second MCS index table; and
determining the first MCS index table or the second MCS index table based on the first indication information, and determining a first target bit rate corresponding to the first MCS index value, wherein
the first MCS index table comprises a second MCS index value, a modulation order corresponding to the second MCS index value is 1, and a product of a target bit rate corresponding to the second MCS index value and 1024 is greater than 314; and
the second MCS index table comprises a third MCS index value, a modulation order corresponding to the third MCS index value is 1, and a product of a target bit rate corresponding to the third MCS index value and 1024 is greater than 198.

7. The method according to claim 6, wherein a product of 1024 and a target bit rate corresponding to an MCS index value whose corresponding modulation order is 1 in the first MCS index table comprises at least one in a first set, and the first set is {340, 378, 379, 386, 434, 449, 466, 490, 502, 517, 526, 553, 567, 602, 616, 658, 666, 679, 719, 758, 772, 822, 873, 898, 910, 948}; or
a product of 1024 and a target bit rate corresponding to an MCS index value whose corresponding modulation order is 1 in the second MCS index table comprises at least one in a second set, and the second set is {240, 314, 340, 378, 379, 386, 434, 449, 466, 490, 502, 517, 526, 553, 567, 602, 616, 658, 666, 679, 719, 758, 772, 822, 873, 898, 910, 948}.

8. The method according to claim 6 or 7, wherein the second MCS index value is one of 28 to 31; or
the third MCS index value is one of 28 to 31.

9. The method according to claim 6 or 7, wherein a quantity of MCS index values in the first MCS index table is greater than 32; or
a quantity of MCS index values in the second MCS index table is greater than 32.

10. The method according to any one of claims 6 to 9, further comprising:
receiving second indication information from the network device, wherein the second indication information indicates that a modulation order used for uplink transmission is 1; and
determining, based on the second indication information, that the modulation order used for uplink transmission is 1.

11. A communication method, comprising:
sending first indication information to a terminal device, wherein the first indication information indicates a third MCS index table, and modulation orders corresponding to MCS index values in the third MCS index table comprise values 1 and 2, and do not comprise a value greater than or equal to 6; and
sending DCI to the terminal device, wherein the DCI comprises a first MCS index value, and the first MCS index value is a value in the third MCS index table.

12. The method according to claim 11, wherein a quantity of MCS index values in the third MCS index table is 16, the third MCS index table comprises M MCS index values whose modulation orders are 1, and M is a positive integer greater than or equal to 3.

13. The method according to claim 11, wherein a quantity of MCS index values in the third MCS index table is 32, the third MCS index table comprises N MCS index values whose modulation orders are 1, and N is a positive integer greater than or equal to 3.

14. The method according to claim 12 or 13, wherein in the third MCS index table, a value of a maximum target bit rate corresponding to a modulation order 1 is greater than a first threshold.

15. A communication method, comprising:
receiving first indication information from a network device, wherein the first indication information indicates a third MCS index table, and modulation orders corresponding to MCS index values in the third MCS index table comprise values 1 and 2, and do not comprise a value greater than or equal to 6; and
receiving DCI from the network device, wherein the DCI comprises a first MCS index value, and the first MCS index value is a value in the third MCS index table; and
determining a first modulation order and a first target bit rate for uplink transmission based on the first indication information and the first MCS index value.

16. The method according to claim 15, wherein a quantity of MCS index values in the third MCS index table is 16, the third MCS index table comprises M MCS index values whose modulation orders are 1, and M is a positive integer greater than or equal to 3.

17. The method according to claim 15, wherein a quantity of MCS index values in the third MCS index table is 32, the third MCS index table comprises M MCS index values whose modulation orders are 1, and M is a positive integer greater than or equal to 3.

18. The method according to claim 16 or 17, wherein in the third MCS index table, a value of a maximum target bit rate corresponding to a modulation order 1 is greater than a first threshold.

19. A communication apparatus, comprising:
a transceiver module, configured to send first indication information, wherein the first indication information indicates a first MCS index table or a second MCS index table, wherein
the transceiver module is further configured to send downlink control information DCI, wherein the DCI comprises a first MCS index value, and the first MCS index value is a value in the first MCS index table or the second MCS index table;
the first MCS index table comprises a second MCS index value, a modulation order corresponding to the second MCS index value is 1, and a product of a target bit rate corresponding to the second MCS index value and 1024 is greater than 314; and
the second MCS index table comprises a third MCS index value, a modulation order corresponding to the third MCS index value is 1, and a product of a target bit rate corresponding to the third MCS index value and 1024 is greater than 198.

20. The apparatus according to claim 19, wherein a product of 1024 and a target bit rate corresponding to an MCS index value whose corresponding modulation order is 1 in the first MCS index table comprises at least one in a first set, and the first set is {340, 378, 379, 386, 434, 449, 466, 490, 502, 517, 526, 553, 567, 602, 616, 658, 666, 679, 719, 758, 772, 822, 873, 898, 910, 948}; or
a product of 1024 and a target bit rate corresponding to an MCS index value whose corresponding modulation order is 1 in the second MCS index table comprises at least one in a second set, and the second set is {240, 314, 340, 378, 379, 386, 434, 449, 466, 490, 502, 517, 526, 553, 567, 602, 616, 658, 666, 679, 719, 758, 772, 822, 873, 898, 910, 948}.

21. The apparatus according to claim 19 or 20, wherein the second MCS index value is one of 28 to 31; or
the third MCS index value is one of 28 to 31.

22. The apparatus according to claim 19 or 20, wherein a quantity of MCS index values in the first MCS index table is greater than 32; or
a quantity of MCS index values in the second MCS index table is greater than 32.

23. The apparatus according to any one of claims 19 to 22, wherein the transceiver module is further configured to:
send second indication information, wherein the second indication information indicates that a modulation order for uplink transmission of a terminal device is 1.

24. A communication apparatus, comprising:
a transceiver module, configured to obtain first indication information, wherein the first indication information indicates a first MCS index table or a second MCS index table, wherein
the transceiver module is further configured to receive DCI, wherein the DCI comprises a first MCS index value, and the first MCS index value is a value in the first MCS index table or the second MCS index table; and
a processing module, configured to determine the first MCS index table or the second MCS index table based on the first indication information, and determine a first target bit rate for uplink transmission corresponding to the first MCS index value, wherein
the first MCS index table comprises a second MCS index value, a modulation order corresponding to the second MCS index value is 1, and a product of a target bit rate corresponding to the second MCS index value and 1024 is greater than 314; and
the second MCS index table comprises a third MCS index value, a modulation order corresponding to the third MCS index value is 1, and a product of a target bit rate corresponding to the third MCS index value and 1024 is greater than 198.

25. The apparatus according to claim 24, wherein a product of 1024 and a target bit rate corresponding to an MCS index value whose corresponding modulation order is 1 in the first MCS index table comprises at least one in a first set, and the first set is {340, 378, 379, 386, 434, 449, 466, 490, 502, 517, 526, 553, 567, 602, 616, 658, 666, 679, 719, 758, 772, 822, 873, 898, 910, 948}; or
a product of 1024 and a target bit rate corresponding to an MCS index value whose corresponding modulation order is 1 in the second MCS index table comprises at least one in a second set, and the second set is {240, 314, 340, 378, 379, 386, 434, 449, 466, 490, 502, 517, 526, 553, 567, 602, 616, 658, 666, 679, 719, 758, 772, 822, 873, 898, 910, 948}.

26. The apparatus according to claim 24 or 25, wherein the second MCS index value is one of 28 to 31; or
the third MCS index value is one of 28 to 31.

27. The apparatus according to claim 24 or 25, wherein a quantity of MCS index values in the first MCS index table is greater than 32; or
a quantity of MCS index values in the second MCS index table is greater than 32.

28. The apparatus according to any one of claims 24 to 27, wherein
the transceiver module is further configured to receive second indication information, wherein the second indication information indicates that a modulation order used for uplink transmission is 1; and
the processing module is further configured to determine, based on the second indication information, that the modulation order used for uplink transmission is 1.

29. A communication apparatus, comprising:
a transceiver module, configured to send first indication information, wherein the first indication information indicates a third MCS index table, and modulation orders corresponding to MCS index values in the third MCS index table comprise values 1 and 2, and do not comprise a value greater than or equal to 6, wherein
the transceiver module is further configured to send DCI, wherein the DCI comprises a first MCS index value, and the first MCS index value is a value in the third MCS index table.

30. The apparatus according to claim 29, wherein a quantity of MCS index values in the third MCS index table is 16, the third MCS index table comprises M MCS index values whose modulation orders are 1, and M is a positive integer greater than or equal to 3.

31. The apparatus according to claim 29, wherein a quantity of MCS index values in the third MCS index table is 32, the third MCS index table comprises N MCS index values whose modulation orders are 1, and N is a positive integer greater than or equal to 3.

32. The apparatus according to claim 30 or 31, wherein in the third MCS index table, a value of a maximum target bit rate corresponding to a modulation order 1 is greater than a first threshold.

33. A communication apparatus, comprising:
a transceiver module, configured to receive first indication information, wherein the first indication information indicates a third MCS index table, and modulation orders corresponding to MCS index values in the third MCS index table comprise values 1 and 2, and do not comprise a value greater than or equal to 6, wherein
the transceiver module is further configured to receive DCI, wherein the DCI comprises a first MCS index value, and the first MCS index value is a value in the third MCS index table; and
a processing module, configured to determine a first modulation order and a first target bit rate for uplink transmission based on the first indication information and the first MCS index value.

34. The apparatus according to claim 33, wherein a quantity of MCS index values in the third MCS index table is 16, the third MCS index table comprises M MCS index values whose modulation orders are 1, and M is a positive integer greater than or equal to 3.

35. The apparatus according to claim 33, wherein a quantity of MCS index values in the third MCS index table is 32, the third MCS index table comprises M MCS index values whose modulation orders are 1, and M is a positive integer greater than or equal to 3.

36. The apparatus according to claim 34 or 35, wherein in the third MCS index table, a value of a maximum target bit rate corresponding to a modulation order 1 is greater than a first threshold.

37. A communication apparatus, comprising:
a memory, configured to store computer instructions; and
a processor, configured to execute the computer instructions stored in the memory, so that the communication apparatus performs the method according to any one of claims 1 to 5, or the method according to any one of claims 6 to 10, or the method according to any one of claims 11 to 14, or the method according to claim 15 to 18.

38. A computer-readable storage medium, storing a computer program, wherein when the computer program is executed by a communication apparatus, the communication apparatus is enabled to perform the method according to any one of claims 1 to 5, or the method according to any one of claims 6 to 10, or the method according to any one of claims 11 to 14, or the method according to claim 15 to 18.
